# EUROPEAN PATENT APPLICATION

(11) **EP 4 711 246 A1**
(43) Date of publication of application: **18.03.2026**
(21) Application number: 23935888.0
(22) Date of filing: 11.05.2023
(51) Int. Cl.: B62D 21/15, B60K 1/04, B62D 21/00, B62D 25/20

(54) **VEHICLE BODY LOWER PART STRUCTURE**

(71) Applicant: Nissan Motor Co., Ltd., Yokohama-shi, Kanagawa 221-0023 (JP)
(72) Inventor: FUKAMI, Tooru, Atsugi-shi, Kanagawa 243-0123 (JP); KAWASOE, Hironori, Atsugi-shi, Kanagawa 243-0123 (JP); SHIINA, Shota, Atsugi-shi, Kanagawa 243-0123 (JP); IKEDA, Akihiro, Atsugi-shi, Kanagawa 243-0123 (JP); KOIKE, Hideki, Atsugi-shi, Kanagawa 243-0123 (JP)
(74) Representative: Global IP Europe Patentanwaltskanzlei
(86) International application number: PCT/JP2023/017717
(87) International publication number: WO 2024/232077

(57) **Abstract**

A vehicle body lower structure including: a side sill; a battery case configured to accommodate a battery module and directly or indirectly coupled to the side sill; and a hollow impact absorbing structure, wherein a lower surface of the battery case is located below a lower end of the side sill, the impact absorbing structure is disposed at a position not overlapping the battery module when viewed from above, and a lower end of the impact absorbing structure is located below the lower surface of the battery case.

## Description

### TECHNICAL FIELD

The present invention relates to a vehicle body lower structure.

### BACKGROUND ART

A vehicle in which a battery is mounted on a lower portion of a vehicle body is known. For example, JP2019-166905A discloses a vehicle including a floor panel and a battery pack mounted under a floor panel, in which the battery pack has a predetermined configuration. In this vehicle, the battery pack includes an assembled battery and a housing case, and an impact absorbing member is provided between the assembled battery and a bottom portion of the housing case.

### SUMMARY OF INVENTION

The present inventors have studied a vehicle body lower structure including a battery case and a side sill, in which a lower surface of the battery case is located below a lower end of the side sill. In a vehicle having such a structure, an obstacle on a road is likely to collide with the battery case earlier than the side sill. Therefore, an impact is easily input to a battery module accommodated in the battery case through the battery case. Since the battery module has an important function in many cases, an excessive impact input may be avoided.

In the vehicle disclosed in JP2019-166905A, an impact absorbing member is provided between the assembled battery and the bottom portion of the housing case, but an impact that cannot be absorbed by the impact absorbing member is input to the assembled battery (corresponding to a battery module). Accordingly, it is desired to provide a technique capable of more reliably reducing an impact input to the battery module.

That is, an object of the present invention is to provide a technique capable of further alleviating an input of an impact to a battery module due to a collision with an obstacle in a vehicle body lower structure in which a lower surface of a battery case is located below a lower end of a side sill.

In one embodiment, a vehicle body lower structure according to the present invention includes a side sill, a battery case that accommodates a battery module and is directly or indirectly coupled to a side sill, and a hollow impact absorbing structure. A lower surface of the battery case is located below a lower end of the side sill. The impact absorbing structure is disposed at a position not overlapping the battery module when viewed from above. A lower end of the impact absorbing structure is located below the lower surface of the battery case.

### BRIEF DESCRIPTION OF DRAWINGS

[FIG. 1] FIG. 1 is a schematic diagram showing an appearance of a vehicle according to a first embodiment when viewed from a side.
[FIG. 2] FIG. 2 is a schematic view showing a part of an AA cross-section of FIG. 1, and is a view showing a vehicle body lower structure.
[FIG. 3] FIG. 3 is a schematic cross-sectional view showing a vehicle body lower structure according to a second embodiment.
[FIG. 4] FIG. 4 is a schematic cross-sectional view showing an impact absorbing structure according to a third embodiment.
[FIG. 5] FIG. 5 is a schematic cross-sectional view showing an impact absorbing structure according to a fourth embodiment.
[FIG. 6] FIG. 6 is a schematic cross-sectional view showing a part of a vehicle body lower structure according to a fifth embodiment.
[FIG. 7] FIG. 7 is a schematic cross-sectional view showing a part of a vehicle body lower structure according to a sixth embodiment.
[FIG. 8] FIG. 8 is a diagram schematically showing a vehicle body lower structure when a vehicle according to a seventh embodiment is viewed from a side.

### DESCRIPTION OF EMBODIMENTS

Hereinafter, embodiments of the present invention will be described with reference to the drawings.

### (1) First Embodiment

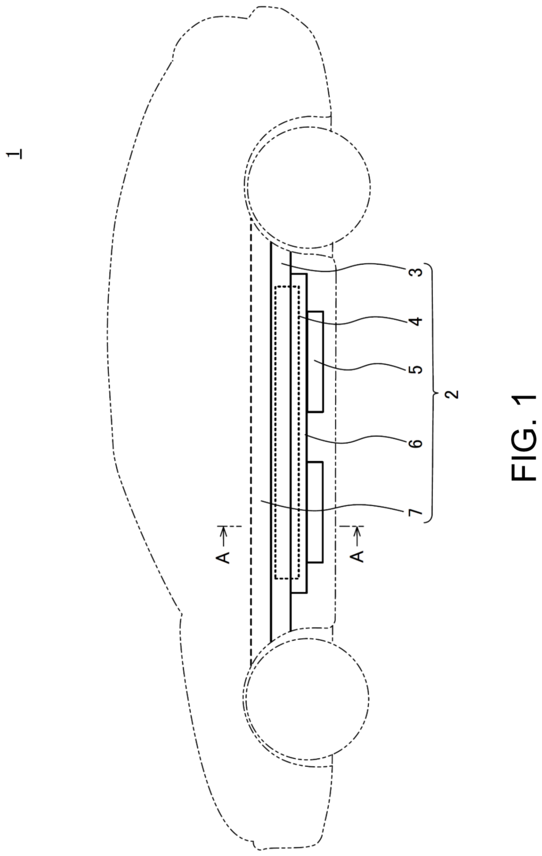

FIG. 1 is a schematic view showing an appearance of a vehicle 1 having a vehicle body lower structure 2 according to the present embodiment when viewed from a side. The vehicle 1 is an electric vehicle and includes a battery case 4. Specifically, the vehicle 1 includes side sills 3, a battery case 4, an impact absorbing structure 5, a vehicle body fastening part 6, and a floor panel 7 as a vehicle body lower structure 2.

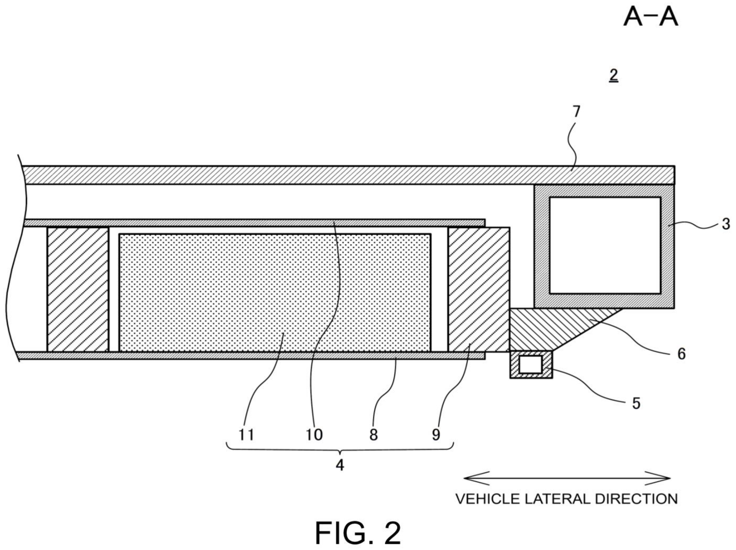

FIG. 2 is a schematic view showing a part of an AA cross-section of FIG. 1, and is a view showing the vehicle body lower structure 2. FIG. 2 shows substantially half of the vehicle 1 in a lateral direction.

The floor panel 7 constitutes a part of a skeleton (vehicle body) of the vehicle 1. The floor panel 7 is a member that forms a bottom surface of a passenger compartment.

The side sill 3 also constitutes a part of the vehicle body. The side sills 3 are provided on both sides of the vehicle 1. The side sills 3 are coupled to the floor panel 7. Each of the side sills 3 are hollow and has a substantially rectangular cross-section. The side sill 3 extends in a front-rear direction of the vehicle (see FIG. 1).

As shown in FIG. 2, the battery case 4 accommodates a battery module 11. The battery module 11 functions as, for example, a drive source of the vehicle 1.

The battery case 4 is disposed below the floor panel 7. The battery case 4 is disposed at a position sandwiched between the side sills 3 on both sides in the lateral direction of the vehicle.

The battery case 4 includes a battery case top plate 10, a battery case bottom plate 8, and frames 9. The battery case top plate 10 and the battery case bottom plate 8 are disposed to sandwich the frames 9 from above and below. Accordingly, a space sandwiched between the battery case bottom plate 8 and the battery case top plate 10 is formed inside the frame 9, and the battery module 11 is accommodated in this space. Although not shown in FIG. 2, each of the frames 9 may have a lattice shape. That is, a plurality of partitioned spaces may exist in the battery case 4, and the battery module 11 may be disposed in each space.

The battery case 4 is directly or indirectly coupled to the side sill 3. In the example shown in FIG. 2, the battery case 4 is coupled to the side sill 3 via the vehicle body fastening part 6.

A lower surface of the battery case 4 (lower surface of the battery case bottom plate 8) is located below a lower end of the side sill 3.

As described above, the vehicle body fastening part 6 is provided to couple the side sill 3 and the battery case 4. A part of the vehicle body fastening part 6 is coupled to a lower surface of the side sill 3. Another part of the vehicle body fastening part 6 is coupled to a side surface of the battery case 4. Specifically, the vehicle body fastening part 6 is coupled to the frame 9 of the battery case 4.

The impact absorbing structure 5 is provided to alleviate an impact from an obstacle on a road. The impact absorbing structure 5 is a hollow member having a rectangular longitudinal section and extends in the front-rear direction. When an impact is applied, the impact absorbing structure 5 is deformed by buckling and crushed. Accordingly, the impact is absorbed.

The impact absorbing structure 5 is disposed at a position not overlapping the battery module 11 when viewed from above. In the example shown in FIG. 2, the impact absorbing structure 5 is disposed outside the battery case 4 extending in the lateral direction. Specifically, the impact absorbing structure 5 is coupled to a lower end of the vehicle body fastening part 6.

A lower end of the impact absorbing structure 5 is located below the lower surface of the battery case 4.

The above is a configuration of the vehicle body lower structure 2 according to the present embodiment. Next, operations and effects of the present embodiment will be described.

According to the present embodiment, since the lower end of the impact absorbing structure 5 is located lower than the lower surface of the battery case 4, an obstacle on a road collides with the impact absorbing structure 5 earlier than the battery case 4. When the obstacle collides with the impact absorbing structure 5, the impact absorbing structure 5 is crushed, and the impact is absorbed.

Here, the impact absorbing structure 5 is disposed at a position not overlapping the battery module 11 when viewed from above. Therefore, the impact that cannot be absorbed by the impact absorbing structure 5 is mainly input to a member other than the battery module 11. Specifically, the impact is input to the side sill 3 and the like via the vehicle body fastening part 6. Accordingly, the impact input to the battery module 11 can be alleviated, and damage of the battery module 11 can be more reliably prevented.

The above is the outline of the vehicle body lower structure 2 according to the present embodiment.

A position of the impact absorbing structure 5 may be a position that does not overlap the battery module 11 when viewed from above. However, as shown in FIG. 2, at least a part of the impact absorbing structure 5 is preferably disposed below the side sill 3 to overlap the side sill 3 when viewed from above. Preferably, the impact absorbing structure 5 is directly or indirectly coupled to the side sill 3. In the example shown in FIG. 2, the impact absorbing structure 5 is indirectly coupled to the side sill 3 via the vehicle body fastening part 6. According to such a configuration, the impact that cannot be absorbed by the impact absorbing structure 5 is more easily input to the side sill 3. Accordingly, the impact input to the battery case 4 can be alleviated, and the damage of the battery module 11 can be more reliably prevented.

The impact absorbing structure 5 may be integrally molded with the vehicle body fastening part 6 or may be formed as a separate component.

In the case of integral molding, for example, the impact absorbing structure 5 and the vehicle body fastening part 6 can be easily manufactured by extrusion molding.

On the other hand, if the impact absorbing structure 5 and the vehicle body fastening part 6 are separate components, the material strengths of both can be freely designed. Accordingly, a structure in which the impact absorbing structure 5 is more easily crushed than the vehicle body fastening part 6 can be easily adopted, and an impact absorbing function of the impact absorbing structure 5 is easily enhanced.

Materials of the vehicle body fastening part 6, the impact absorbing structure 5, the side sill 3, the frame 9, and the like are not particularly limited. The vehicle body fastening part 6, the impact absorbing structure 5, the side sill 3, the frame 9, and the like can be coupled by welding or fastening parts (bolts and nuts), for example.

### (2) Second Embodiment

Next, a second embodiment will be described. A detailed description of a point that the same configuration as that of the first embodiment can be adopted will be omitted.

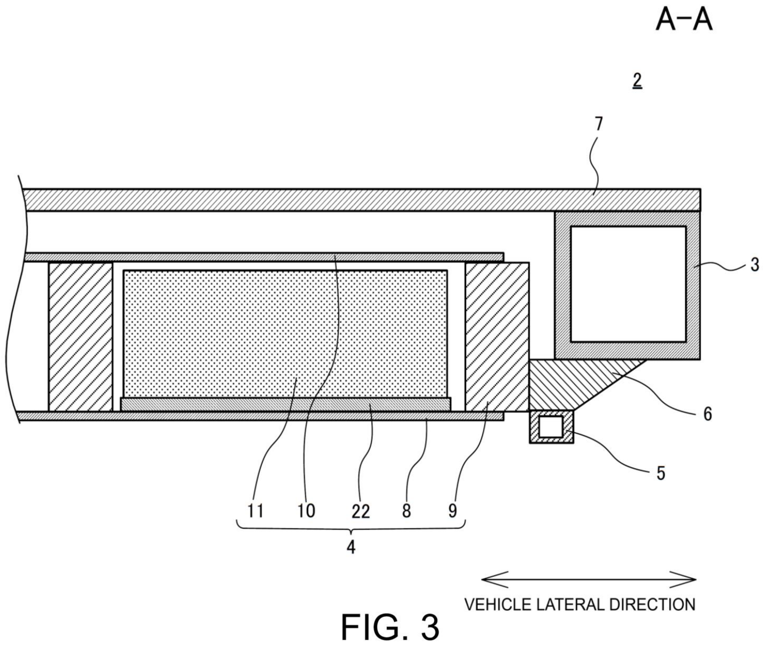

FIG. 3 is a schematic cross-sectional view showing the vehicle body lower structure 2 according to the present embodiment. In the present embodiment, in the battery case 4, a cooling mechanism 22 is provided between the battery case bottom plate 8 and the battery module 11. The cooling mechanism 22 has a substantially plate shape, and a flow path (not shown) through which a refrigerant flows is provided in the cooling mechanism 22.

When the cooling mechanism 22 is provided in a lower portion of the battery module 11 as in the present embodiment, the refrigerant may leak when an impact is input to the cooling mechanism 22. However, according to the present embodiment, the impact that cannot be absorbed by the impact absorbing structure 5 is mainly input to a portion other than the battery module 11. That is, the impact that cannot be absorbed by the impact absorbing structure 5 is input to a portion other than the cooling mechanism 22. Accordingly, leakage of the refrigerant due to the damage of the cooling mechanism 22 can be prevented.

### (3) Third Embodiment

Next, a third embodiment will be described. A detailed description of a point that the same configuration as that of the above-described embodiments can be adopted will be omitted.

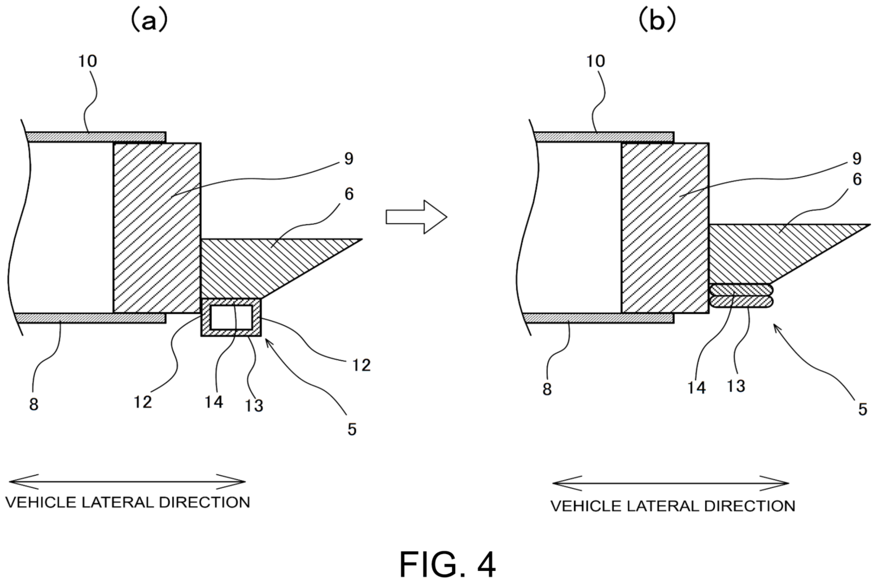

In the present embodiment, a configuration of the impact absorbing structure 5 is devised. FIG. 4 is a schematic cross-sectional view showing the impact absorbing structure 5 according to the present embodiment. (a) of FIG. 4 shows a state before impact input, and (b) of FIG. 4 shows a state after impact input.

The impact absorbing structure 5 according to the present embodiment is configured such that, when a hollow portion is crushed, the lower end of the crushed impact absorbing structure 5 is located above the lower surface of the battery case 4.

Specifically, as shown in (a) of FIG. 4, the impact absorbing structure 5 includes a lower surface portion 13, an upper surface portion 14, and ribs 12. The lower surface portion 13 and the upper surface portion 14 each have a plate shape and are disposed along a horizontal direction. The ribs 12 extend in the up-down direction (vertical direction) and couple the lower surface portion 13 and the upper surface portion 14. The impact absorbing structure 5 is coupled to the vehicle body fastening part 6 on the upper surface portion 14. Here, a coupling position between the upper surface portion 14 and the vehicle body fastening part 6 is located above the lower surface of the battery case 4 (that is, lower surface of the battery case bottom plate 8).

As shown in (b) of FIG. 4, a lower end (lower surface of the lower surface portion 13) of the impact absorbing structure 5 after the hollow portion is crushed is located above the lower surface of the battery case 4. In other words, in the impact absorbing structure 5, an arrangement position of the impact absorbing structure 5 and a thickness of the upper surface portion 14 and the lower surface portion 13 are set such that the lower end of the impact absorbing structure 5 is located above the lower surface of the battery case 4 when the entire thickness of the impact absorbing structure 5 is crushed to have the thickness of only the lower surface portion 13 and the upper surface portion 14.

According to the present embodiment, the impact absorbing function of the impact absorbing structure 5 can be enhanced. An impact absorption capability of the impact absorbing structure 5 increases as a height at which the impact absorbing structure 5 can be crushed increases. According to the present embodiment, since the impact absorbing structure 5 can be crushed to a position above the lower surface of the battery case 4, a high impact absorption capability can be obtained.

### (4) Fourth Embodiment

Next, a fourth embodiment will be described. A detailed description of a point that the same configuration as that of the above-described embodiments can be adopted will be omitted.

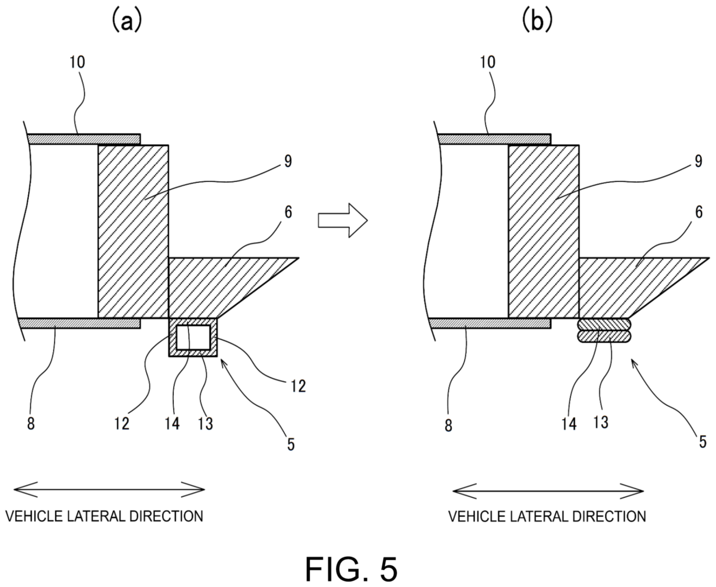

In the present embodiment, the configuration of the impact absorbing structure 5 is devised. FIG. 5 is a schematic cross-sectional view showing the impact absorbing structure 5 according to the present embodiment. (a) of FIG. 5 shows a state before impact input, and (b) of FIG. 5 shows a state after impact input.

As shown in (a) and (b) of FIG. 5, in the present embodiment, unlike the third embodiment, even when the entire thickness of the impact absorbing structure 5 is crushed to have the thickness of only the lower surface portion 13 and the upper surface portion 14, the lower end of the impact absorbing structure 5 is located below the lower surface of the battery case 4.

According to the present embodiment, even after the impact absorbing structure 5 is crushed once, the lower end of the impact absorbing structure 5 is still located below the lower surface of the battery case 4. Therefore, even after the second time, the obstacle is likely to collide with the impact absorbing structure 5 earlier than the battery case 4. Even after the impact absorbing structure 5 is crushed once, it is possible to continuously alleviate the input of the impact to the battery module 11.

### (5) Fifth Embodiment

Next, a fifth embodiment will be described. A detailed description of a point that the same configuration as that of the above-described embodiments can be adopted will be omitted.

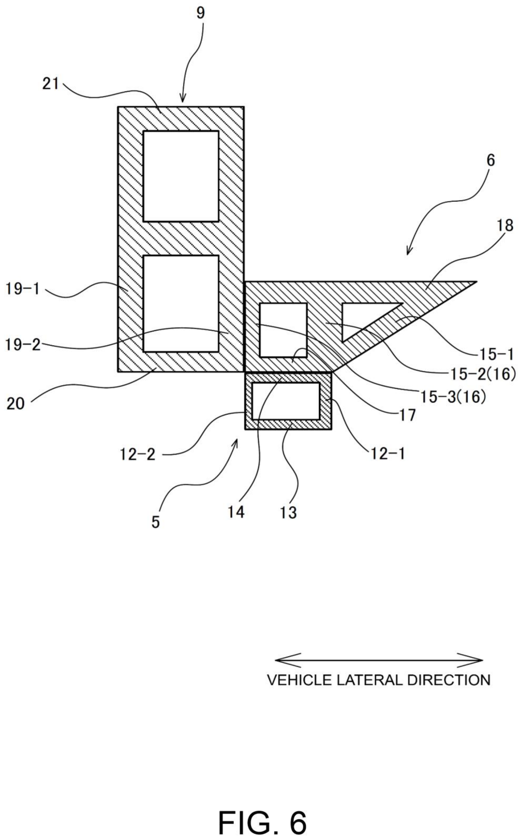

FIG. 6 is a schematic cross-sectional view showing a part of the vehicle body lower structure 2 according to the present embodiment, and is a view showing a cross section when the vehicle 1 is cut along the lateral direction. In the present embodiment, the configurations of the frame 9 and the vehicle body fastening part 6 are devised.

As shown in FIG. 6, the vehicle body fastening part 6 includes a fastening part upper surface portion 18, a fastening part lower surface portion 17, and upper and lower surface coupling ribs (15-1 to 15-3). The fastening part upper surface portion 18 and the fastening part lower surface portion 17 each have a flat plate shape. Although not shown, the vehicle body fastening part 6 is coupled to the side sill 3 on the fastening part upper surface portion 18. The impact absorbing structure 5 is coupled to the fastening part lower surface portion 17.

The upper and lower surface coupling ribs (15-1 to 15-3) couple the fastening part lower surface portion 17 and the fastening part upper surface portion 18. The upper and lower surface coupling ribs (15-1 to 15-3) have high rigidity. The upper and lower surface coupling rib 15-1 extends obliquely with respect to the vertical direction. On the other hand, the upper and lower surface coupling ribs 15-2 and 15-3 extend in a longitudinal direction (vertical direction). The ribs extending in the longitudinal direction may be hereinafter referred to as "vertical ribs".

The frame 9 includes a frame upper surface portion 21, a frame lower surface portion 20, and ribs (19-1 to 19-2). The frame upper surface portion 21 and the frame lower surface portion 20 each have a flat plate shape. The ribs (19-1 to 19-2) extend to couple the frame upper surface portion 21 and the frame lower surface portion 20. The ribs (19-1 to 19-2) extend in the longitudinal direction. That is, these ribs are also vertical ribs.

The impact absorbing structure 5 includes a lower surface portion 13, an upper surface portion 14, and ribs (12-1 and 12-2). These configurations are the same as those in the third and fourth embodiments. The ribs (12-1 and 12-2) extend in the longitudinal direction. That is, the ribs (12-1 and 12-2) are vertical ribs.

As described above, the impact absorbing structure 5 is coupled to a lower surface (fastening part lower surface portion 17) of the vehicle body fastening part 6. The vertical ribs (upper and lower surface coupling ribs 15-2 and 15-3) of the vehicle body fastening part 6 exist above the vertical ribs (ribs 12-1 and 12-2) included in the impact absorbing structure 5. Specifically, the rib 12-1 and the upper and lower surface coupling rib 15-2 vertically overlap each other, and the rib 12-2 and the upper and lower surface coupling rib 15-3 vertically overlap each other. In the following description, the vertical rib located above the vertical rib included in the impact absorbing structure 5 may be referred to as a direct upward vertical rib 16. In the example shown in FIG. 6, each of the upper and lower surface coupling ribs (15-2 and 15-3) is the direct upward vertical rib 16.

According to the above-described configuration, the vertical ribs (rib 12-1 and rib 12-2) of the impact absorbing structure 5 are more likely to be crushed due to the presence of the direct upward vertical rib 16. That is, when an impact is input, the impact absorbing structure 5 is easily crushed, and the impact is absorbed more efficiently.

In the present embodiment, a case where the impact absorbing structure 5 is coupled to the lower surface of the vehicle body fastening part 6 has been described. However, at least a part of the impact absorbing structure 5 may be coupled to a lower surface of the frame 9. The vertical ribs included in the impact absorbing structure 5 may be exist at a position overlapping the frame 9. In this case, the vertical rib (rib 19-1 or 19-2) of the frame 9 may exist as the direct upward vertical rib 16 above the vertical rib included in the impact absorbing structure 5. Even in the case of having such a configuration, since the impact absorbing structure 5 is more easily crushed due to the presence of the direct upward vertical rib 16, the impact is more efficiently absorbed by the impact absorbing structure 5.

Further, in the present embodiment, as shown in FIG. 6, when viewed along the front-rear direction of the vehicle, it is preferable that the upper and lower surface coupling ribs (15-1 to 15-3) of the vehicle body fastening part 6 each extend linearly. That is, when viewed along the front-rear direction of the vehicle, the upper and lower surface coupling ribs (15-1 to 15-3) preferably extend linearly from a coupling portion between the vertical ribs (ribs 12-1 and 12-2) of the impact absorbing structure 5 and the fastening part lower surface portion 17 toward a coupling portion between the side sill 3 (not shown) and the fastening part upper surface portion 18. According to such a configuration, the impact input to the impact absorbing structure 5 is easily distributed to the vehicle body fastening part 6 and the side sill 3 through the upper and lower surface coupling ribs (15-1 to 15-3). As a result, an impact is less likely to be input to the battery case 4, and the damage of the battery module 11 can be more reliably prevented.

Furthermore, in the present embodiment, as shown in FIG. 6, a thickness of each of the vertical ribs (ribs 12-1 and 12-2) of the impact absorbing structure 5 is preferably smaller than a thickness of the direct upward vertical rib 16. By adopting such a configuration, the vertical rib of the impact absorbing structure 5 is more easily crushed than the direct upward vertical rib 16. That is, the direct upward vertical rib 16 is less likely to buckle. As a result, it is possible to prevent deterioration of the impact absorbing function due to the buckling of the direct upward vertical rib 16, and the impact is more easily absorbed by the impact absorbing structure 5.

### (6) Sixth Embodiment

Next, a sixth embodiment will be described. The present embodiment can be said to be a modification of the fifth embodiment. Therefore, the same configuration as that of the fifth embodiment can be adopted for points not particularly described.

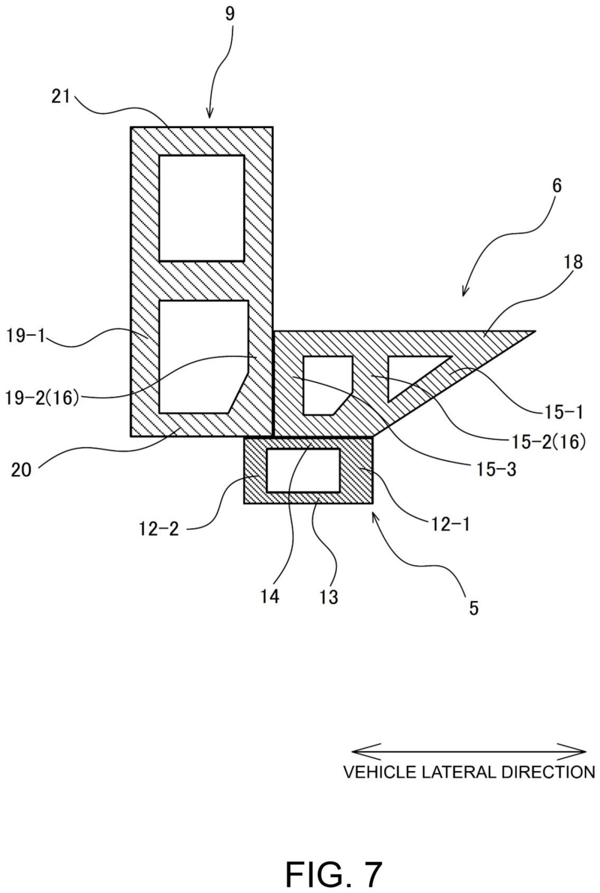

FIG. 7 is a schematic cross-sectional view showing a part of the vehicle body lower structure 2 according to the present embodiment, and is a view showing a cross section when the vehicle 1 is cut along the lateral direction.

As shown in FIG. 7, the impact absorbing structure 5 also overlaps a part of the frame 9 in the up-down direction. The upper and lower surface coupling rib 15-2 and the rib 19-2 are exist above the rib 12-1 and the rib 12-2 of the impact absorbing structure 5 as the direct upward vertical rib 16. That is, the vertical rib (rib 19-2) included in the frame 9 also functions as the direct upward vertical rib 16.

Here, a thickness of a lower end of each of the direct upward vertical ribs 16 is larger than a thickness of the other portion of the direct upward vertical rib 16. That is, a thickness of each of the direct upward vertical ribs 16 is locally increased in a portion close to the coupling portion with the vertical rib of the impact absorbing structure 5. According to such a configuration, the direct upward vertical rib 16 is less likely to buckle. As a result, it is possible to prevent deterioration of the impact absorbing function due to the buckling of the direct upward vertical rib 16. By locally increasing the thickness of the lower end of each of the direct upward vertical ribs 16, an impact absorbing function can be improved while reducing the weight increase to a minimum limit. In addition, compared to a case in which the thickness of the direct upward vertical rib 16 is thick as a whole, a material ratio of the direct upward vertical rib 16 can be reduced. Further, the structure of the vehicle can be reduced in weight.

### (7) Seventh Embodiment

Next, a seventh embodiment will be described. A detailed description of a point that the same configuration as that of the above-described embodiments can be adopted will be omitted.

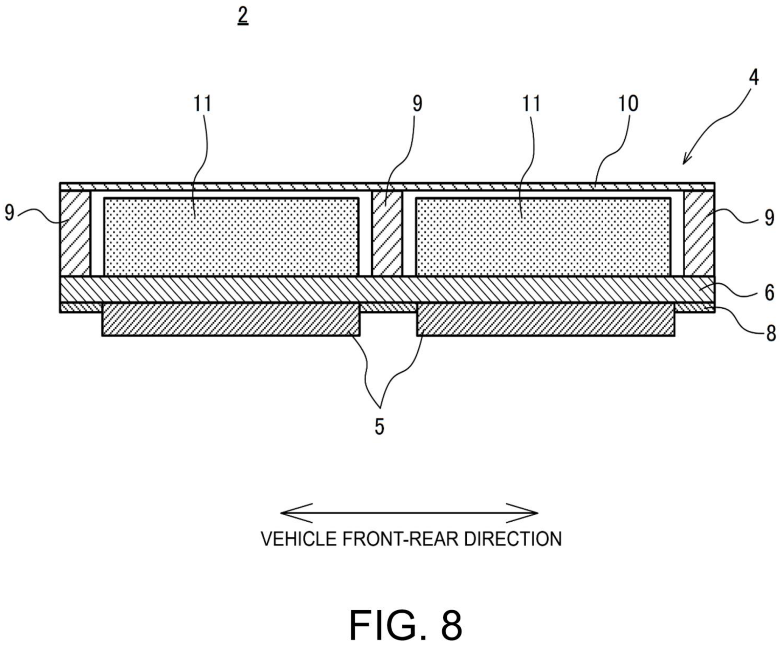

In the present embodiment, a positional relation between the impact absorbing structure 5 and the battery module 11 is devised. FIG. 8 is a diagram schematically showing the vehicle body lower structure 2 when the vehicle is viewed from the lateral direction (side). FIG. 8 shows a positional relation between each component included in the battery case 4 and the impact absorbing structure 5.

As shown in FIG. 8, the impact absorbing structure 5 is disposed below the battery module 11 when viewed from the side of the vehicle.

Specifically, in the battery case 4, the frames 9 are arranged in a grid pattern. As a result, a plurality of spaces each accommodating the battery module 11 are formed in the battery case 4. That is, a plurality of battery modules 11 are disposed in the battery case 4. The position of the impact absorbing structure 5 in the front-rear direction of the vehicle is substantially the same as a position where each battery module 11 is provided. The impact absorbing structure 5 is not provided at a position where the battery module 11 is not provided.

According to the present embodiment, since the impact absorbing structure 5 is provided at a position corresponding to the battery module 11, an obstacle on a road is likely to collide with the impact absorbing structure 5 earlier than the battery module 11. Thus, an impact input to the battery module 11 is alleviated.

On the other hand, the impact absorbing structure 5 is not provided at a position where the battery module 11 is not provided when viewed from the lateral direction (for example, between one battery module 11 and the other battery module 11). Accordingly, the cost required for the impact absorbing structure 5 can be reduced. In addition, the weight can be reduced.

Although the embodiments of the present invention have been described above, the above embodiments merely show a part of the application example of the present invention, and the technical scope of the present invention is not limited to the specific configuration of the above embodiments.

The relationship between the configuration and the effects of the present invention will be summarized below.

In one embodiment, the vehicle body lower structure 2 includes the side sill 3, the battery case 4 that accommodates the battery module 11 and is directly or indirectly coupled to the side sill 3, and the hollow impact absorbing structure 5. The lower surface of the battery case 4 is located below the lower end of the side sill 3. The impact absorbing structure 5 is disposed at a position not overlapping the battery module 11 when viewed from above. The lower end of the impact absorbing structure 5 is located below the lower surface of the battery case 4. According to such a configuration, an obstacle on a road is likely to collide with the impact absorbing structure 5 earlier than the battery case 4. Therefore, the impact caused by the collision is absorbed by the impact absorbing structure 5. Further, since the impact absorbing structure 5 does not overlap the battery module 11, the impact that is not absorbed by the impact absorbing structure 5 is easily input to a portion different from the battery module 11. The impact input to the battery module 11 can be alleviated, and damage of the battery module 11 can be prevented.

In a preferred embodiment, at least a part of the impact absorbing structure 5 is disposed below the side sill 3 to overlap the side sill 3 when viewed from above. The impact absorbing structure 5 is directly or indirectly coupled to the side sill 3. According to such a configuration, an impact that is not absorbed by the impact absorbing structure 5 is easily input to the side sill 3, and is less likely to be input to the battery module 11. Accordingly, the damage of the battery module 11 can be more reliably prevented.

In one preferred embodiment, the battery case 4 includes the battery case bottom plate 8 and the cooling mechanism 22 disposed between the battery case bottom plate 8 and the battery module 11. In such a configuration, in general, the cooling mechanism 22 may be damaged by an input of an impact and the refrigerant may leak. However, according to this embodiment, since the input of the impact to a lower portion of the battery module 11 is alleviated by the presence of the impact absorbing structure 5, the damage of the cooling mechanism 22 is prevented. Accordingly, refrigerant is less likely to leak.

In a preferred embodiment, the impact absorbing structure 5 is configured such that, when a hollow portion is crushed, the lower end of the crushed impact absorbing structure 5 is located above the lower surface of the battery case 4. According to such a configuration, since a large height at which the impact absorbing structure 5 can be crushed is secured, a high impact absorption capability can be realized.

In a preferred embodiment, the impact absorbing structure 5 is configured such that, when the hollow portion is crushed, the lower end of the crushed impact absorbing structure 5 is located below the lower surface of the battery case 4. According to such a configuration, even if the impact absorbing structure 5 is crushed once, the lower end of the impact absorbing structure 5 is still located below the lower surface of the battery case 4. Accordingly, even in the second and subsequent collision, an obstacle is likely to collide with the impact absorbing structure 5 earlier than the battery case 4, and the input of the impact to the battery module 11 is likely to be alleviated.

In a preferred embodiment, the vehicle body lower structure 2 further includes the vehicle body fastening part 6 that couples the side sill 3 and the battery case 4. The battery case 4 includes the frames 9. The impact absorbing structure 5 is coupled to the lower surface of the vehicle body fastening part 6 or the frame 9. Each of the vehicle body fastening part 6, the frame 9, and the impact absorbing structure 5 has a vertical rib extending in the up-down direction. The vertical rib of the vehicle body fastening part 6 or the frame 9 exists above the vertical rib 12 of the impact absorbing structure 5 as the direct upward vertical rib 16. According to such a configuration, the vehicle body fastening part 6 or the frame 9 is less likely to buckle due to the presence of the direct upward vertical rib 16. As a result, the impact absorbing structure 5 is easily crushed, and the impact can be absorbed more reliably by the impact absorbing structure 5.

In a preferred embodiment, a thickness of the vertical rib 12 of the impact absorbing structure 5 is smaller than a thickness of the direct upward vertical rib 16. According to such a configuration, the vertical rib 12 of the impact absorbing structure 5 is more easily crushed than the direct upward vertical rib 16. That is, the impact absorbing structure 5 is easily crushed, and the impact can be absorbed more reliably by the impact absorbing structure 5.

In a preferred embodiment, the thickness of the lower end of the direct upward vertical rib 16 is larger than the thickness of the other portion of the direct upward vertical rib 16. According to such a configuration, the vertical rib 12 of the impact absorbing structure 5 is more easily crushed than the direct upward vertical rib 16. That is, the impact absorbing structure 5 is easily crushed, and the impact can be absorbed more reliably by the impact absorbing structure 5. Further, the material cost can be reduced as compared with a case of increasing the overall thickness of the direct upward vertical rib 16. In addition, the weight can be reduced.

In a preferred embodiment, the vehicle body lower structure 2 further includes the vehicle body fastening part 6 that couples the side sill 3 and the battery case 4. The impact absorbing structure 5 is coupled to the lower surface of the vehicle body fastening part 6. The impact absorbing structure 5 is integrally molded with the vehicle body fastening part 6. According to such a configuration, for example, the impact absorbing structure 5 and the vehicle body fastening part 6 can be easily manufactured by extrusion molding or the like.

In a preferred embodiment, the vehicle body lower structure 2 includes the vehicle body fastening part 6 that couples the side sill 3 and the battery case 4. The impact absorbing structure 5 is coupled to the lower surface of the vehicle body fastening part 6. The impact absorbing structure 5 and the vehicle body fastening part 6 are configured as separate components. According to such a configuration, the material strength of the impact absorbing structure 5 and the vehicle body fastening part 6 can be freely designed. Accordingly, a structure in which the impact absorbing structure 5 is more easily crushed than the vehicle body fastening part 6 can be easily adopted, and an impact absorbing function of the impact absorbing structure 5 is easily enhanced.

In a preferred embodiment, the vehicle body lower structure 2 further includes the vehicle body fastening part 6 that couples the side sill 3 and the battery case 4. The vehicle body fastening part 6 includes the fastening part upper surface portion 18 coupled to the lower surface of the side sill 3, the fastening part lower surface portion 17 to which the impact absorbing structure 5 is coupled, and upper and lower surface coupling ribs (15-1 to 15-3) coupling the fastening part upper surface portion 18 and the fastening part lower surface portion 17. The impact absorbing structure 5 has the vertical rib 12 extending in the up-down direction. When viewed along the front-rear direction of the vehicle, the upper and lower surface coupling ribs (15-1 to 15-3) extend linearly from the coupling portion between the vertical rib 12 of the impact absorbing structure 5 and the fastening part lower surface portion 17 toward the coupling portion between the side sill 3 and the fastening part upper surface portion 18. According to such a configuration, the impact input to the impact absorbing structure 5 is easily distributed to the vehicle body fastening part 6 and the side sill 3 through the upper and lower surface coupling ribs (15-1 to 15-3). As a result, an impact is less likely to be input to the battery case 4, and the damage of the battery module 11 can be more reliably prevented.

In a preferred embodiment, the impact absorbing structure 5 is disposed below the battery module 11 when viewed from the side of the vehicle. According to such a configuration, since the impact absorbing structure 5 is provided at a position corresponding to the battery module 11, an obstacle on a road is likely to collide with the impact absorbing structure 5 earlier than the battery module 11. Thus, the impact input to the battery module 11 is alleviated. Further, since the impact absorbing structure 5 may not be provided at a position where the battery module 11 is not provided, the cost required for the impact absorbing structure 5 can be reduced. In addition, the weight can be reduced.

## Claims

1. A vehicle body lower structure comprising:
a side sill;
a battery case configured to accommodate a battery module and directly or indirectly coupled to the side sill; and
a hollow impact absorbing structure, wherein
a lower surface of the battery case is located below a lower end of the side sill,
the impact absorbing structure is disposed at a position not overlapping the battery module when viewed from above, and
a lower end of the impact absorbing structure is located below the lower surface of the battery case.

2. The vehicle body lower structure according to claim 1, wherein
at least a part of the impact absorbing structure is disposed below the side sill to overlap the side sill when viewed from above, and
the impact absorbing structure is directly or indirectly coupled to the side sill.

3. The vehicle body lower structure according to claim 1, wherein
the battery case includes
a battery case bottom plate, and
a cooling mechanism disposed between the battery case bottom plate and the battery module.

4. The vehicle body lower structure according to claim 1, wherein
the impact absorbing structure is configured such that, when a hollow portion is crushed, a lower end of the crushed impact absorbing structure is located above the lower surface of the battery case.

5. The vehicle body lower structure according to claim 1, wherein
the impact absorbing structure is configured such that, when a hollow portion is crushed, a lower end of the crushed impact absorbing structure is located below the lower surface of the battery case.

6. The vehicle body lower structure according to claim 1, further comprising:
a vehicle body fastening part configured to couple the side sill and the battery case, wherein
the battery case includes a frame,
the impact absorbing structure is coupled to a lower surface of the vehicle body fastening part or the frame,
each of the vehicle body fastening part, the frame, and the impact absorbing structure has a vertical rib extending in an up-down direction, and
the vertical rib of the vehicle body fastening part or the frame exists above the vertical rib of the impact absorbing structure as a direct upward vertical rib.

7. The vehicle body lower structure according to claim 6, wherein
a thickness of the vertical rib of the impact absorbing structure is smaller than a thickness of the direct upward vertical rib.

8. The vehicle body lower structure according to claim 6, wherein
a thickness of a lower end of the direct upward vertical rib is larger than a thickness of another portion of the direct upward vertical rib.

9. The vehicle body lower structure according to claim 1, further comprising:
a vehicle body fastening part configured to couple the side sill and the battery case, wherein
the impact absorbing structure is coupled to a lower surface of the vehicle body fastening part, and
the impact absorbing structure is integrally molded with the vehicle body fastening part.

10. The vehicle body lower structure according to claim 1, further comprising:
a vehicle body fastening part configured to couple the side sill and the battery case, wherein
the impact absorbing structure is coupled to a lower surface of the vehicle body fastening part, and
the impact absorbing structure and the vehicle body fastening part are formed as separate components.

11. The vehicle body lower structure according to claim 1, further comprising:
a vehicle body fastening part configured to couple the side sill and the battery case, wherein
the vehicle body fastening part includes
a fastening part upper surface portion coupled to a lower surface of the side sill,
a fastening part lower surface portion to which the impact absorbing structure is coupled, and
an upper and lower surface coupling rib configured to couple the fastening part upper surface portion and the fastening part lower surface portion,
the impact absorbing structure has a vertical rib extending in an up-down direction, and
when viewed along a front-rear direction of a vehicle, the upper and lower surface coupling rib extends linearly from a coupling portion between the vertical rib of the impact absorbing structure and the fastening part lower surface portion toward a coupling portion between the side sill and the fastening part upper surface portion.

12. The vehicle body lower structure according to claim 1, wherein
the impact absorbing structure is disposed below the battery module when viewed from a side of a vehicle.
